# EUROPÄISCHE PATENTSCHRIFT

(11) **EP 2 607 265 B1**
(45) Veröffentlichungstag und Bekanntmachung des Hinweises auf die Patenterteilung: **04.05.2016**
(21) Anmeldenummer: 12187474.7
(22) Anmeldetag: 05.10.2012
(51) Int. Cl.: B65D 83/00, A61C 5/06, B05C 17/005

(54) **Austraggerät für Mehrkomponentenkartusche**
Discharge device for multi-component cartridge
Appareil de décharge pour cartouche à plusieurs composants

(30) Priorität: 22.12.2011 EP 11195135
(43) Veröffentlichungstag der Anmeldung: 26.06.2013
(73) Patentinhaber: Sulzer Mixpac AG, 9469 Haag (CH)
(72) Erfinder: Baldelli, Enrico, 6300 Zug (CH)
(74) Vertreter: Manitz, Finsterwald & Partner GbR

(56) Entgegenhaltungen:
- EP-A2- 0 885 599
- WO-A1-2007/073607
- CH-A1- 703 427

## Beschreibung

Die Erfindung betrifft ein Austraggerät für Mehrkomponentenkartuschen, welches manuell betätigbar ist.

Ein derartiges Austraggerät ist beispielsweise aus der EP0885599, EP0791403 B1 oder der EP0791404 B1 bekannt. Die in der EP0791403 B1 beschriebene Zweikomponentenkartusche weist zwei Vorratsbehälter auf, die dort als Zylinder mit gleicher Querschnittsfläche ausgestaltet sind. Das einlassseitige Kartuschenende ist als Flansch ausgebildet, welcher die beiden Zylinder verbindet. In dem Flansch ist ein Codiermittel angebracht, um die Zylinder korrekt im Austraggerät zu positionieren. Das Austraggerät weist eine zum Flansch passende Ausnehmung auf, in welche der Flansch von oben eingesteckt wird. Insbesondere wenn die Füllmasse zähflüssig ist, wirken auf das Austraggerät grosse Austragkräfte auf das oben offene Ende der Halterung für den Flansch des Austragsendes der Zweikomponentenkartusche.

Daher wird in der EP0791404 B1 oder der EP0543776 B1 eine Sicherungsklappe vorgesehen, welche den Flansch von oben an das Gehäuse der Austragvorrichtung drückt. Allerdings hat sich diese Massnahme bei zähflüssigen Füllmassen als nicht ausreichend erwiesen, da die Sicherungsklappe aufgrund der grossen Kräfte beschädigt werden kann und sogar zu Bruch gehen kann. Insbesondere für vom 1:1 Mischungsverhältnis abweichende Mischungsverhältnisse gilt, dass die Mehrkomponentenkartusche über die Längsseite des Flansches ungleichmässig belastet werden kann. Dies kann zur Ausbildung eines Kippmoments führen, sodass sich auch in diesem Fall eine ungleichmässige Lastverteilung in der Sicherungsklappe ergeben kann, was zu Schäden an der Sicherungsklappe führen kann.

Die nachveröffentlichte CH 703 427 A1 beschreibt ein Austraggerät in Form eines Dispensers, mittels welchem mindestens eine fliessfähige Komponente aus einer Kartusche ausgetragen werden kann. Das Austraggerät weist einen Kartuschenhalter und ein darin entlang einer Vorschubrichtung verschiebbares Vorschubelement auf. Die Kartusche wird entgegen der Vorschubrichtung axial in den Kartuschenhalter eingeführt. Um die Kartusche axial zu fixieren, ist am Kartuschenhalter ein Drehelement angebracht. In einer ersten Orientierung des Drehelements lässt sich die Kartusche entgegen der Vorschubrichtung in den Kartuschenhalter einschieben, während das Drehelement das in der zweiten Orientierung die Kartusche axial fixiert. Bei der Drehung des Drehelements von der ersten in die zweite Orientierung und damit bei der axialen Fixierung findet keine Drehung der Kartusche statt.

Eine Aufgabe der Erfindung ist, es, eine alternative Befestigung des Flansches des Kartuschenendes im Austraggerät zu schaffen, welche eine längere Gebrauchsdauer aufweist, weil durch eine verbesserte Lastverteilung die Halterung für den Flansch des Kartuschenendes geringeren Kräften ausgesetzt ist.

Es ist eine weitere Aufgabe der Erfindung, ein Austraggerät zu schaffen, welches eine vereinfachte Handhabung und Auswechseln der Mehrkomponentenkartusche ermöglicht.

Die Aufgabe der Erfindung wird durch ein Austraggerät gelöst, welches nachfolgende Merkmale aufweist: das Austraggerät für eine Mehrkomponentenkartusche enthält ein Gehäuse, in welchem ein Aufnahmeelement zur Aufnahme eines Kartuschenendes der Mehrkomponentenkartusche angeordnet ist. Das Kartuschenende befindet sich an der Einlassseite der Mehrkomponentenkartusche. Die Mehrkomponentenkartusche weist in der Form einer Zweikomponentenkartusche einen mit einer Füllmasse befüllten und am Kartuschenende durch je einen Kolben fluiddicht verschlossenen ersten und zweiten Vorratsbehälter auf. In dem Gehäuse sind eine Stösselanordnung und eine Antriebsanordnung zur Bewegung der Stösselanordnung angeordnet. Durch die Antriebsanordnung ist eine Bewegung der Stösselanordnung in eine Austragsrichtung zum Austrag der Füllmasse aus den Vorratsbehältern der Mehrkomponentenkartusche ausführbar. Das Aufnahmeelement weist eine Drehachse auf, die im wesentlichen parallel zur Austragsrichtung angeordnet ist. Das in das Aufnahmeelement eingeschobene Kartuschenende ist durch eine Drehung um die Drehachse von einer Montageposition in eine Austragsposition überführbar. Die Mehrkomponentenkartusche wird insbesondere quer zur Austragrichtung in das Aufnahmeelement eingeschoben.

Der Drehwinkel zur Drehung des Kartuschenendes von der Montageposition in die Austragsposition beträgt vorteilhafterweise im wesentlichen 90°. Hierdurch wird gewährleistet, dass die Lastverteilung möglichst gleichmässig ist und das Kartuschenende insbesondere bis auf einen schmalen Einschubabschnitt vollständig im Aufnahmeelement aufgenommen ist.

Gemäss eines Ausführungsbeispiels ist das Aufnahmeelement in einem Führungselement drehbar angeordnet. Das Führungselement kann hierzu im Einbauzustand untrennbar mit dem Gehäuse verbunden sein. Insbesondere kann das Aufnahmeelement im Führungselement im Gehäuse drehbar gelagert sein. Das Führungselement kann als ein Vorsprung ausgebildet sein, welcher in einer Nut des Aufnahmeelements aufnehmbar ist.

Beim Zusammenbau von Kartuschenende und Aufnahmeelement sind die ersten und zweiten Vorratsbehälter entlang der sich zwischen deren Längsachsen erstreckenden Verbindungslinie zwischen einer zweiten Öffnung für den zweiten Vorratsbehälter und einer ersten Öffnung für den ersten Vorratsbehälter verschiebbar. Hierdurch ist gewährleistet, dass das Einschieben über die kleinste Abmessung, die Breitenabmessung des Flansches des Kartuschenendes erfolgt.

Nach einem Ausführungsbeispiel weist das Aufnahmeelement eine Führungsnut zur Aufnahme des Kartuschenendes auf. Insbesondere kann das Aufnahmeelement oder das Führungselement einen Anschlag aufweisen, um die Drehung zwischen der Montageposition und der Austragsposition zu begrenzen. Das Aufnahmeelement kann einen Anschlag und/oder ein Verriegelungselement zum Feststellen der Mehrkomponentenkartusche in der Austragsposition und/oder Montageposition, insbesondere ein Rastelement zum Einrasten in der Austragsposition und/oder der Montageposition aufweisen. beim Einrasten kann ein Klickgeräusch emittierbar sein, sodass das Einrasten für den Benutzer hörbar ist.

Das Kartuschenende ist nach jedem der Ausführungsbeispiele in das Aufnahmeelement einschiebbar und wieder aus dem Aufnahmeelement entfernbar. Das Aufnahmeelement kann ein Codierungselement zur korrekten Positionierung der Vorratsbehälter der Mehrkomponentenkartusche aufweisen. Insbesondere kann das Codierungselement eine erste Öffnung und eine zweite Öffnung umfassen, in welchen je ein Vorratsbehälter der Mehrkomponentenkartusche aufnehmbar ist, wobei sich der Durchmesser der ersten Öffnung vom Durchmesser der zweiten Öffnung unterscheidet.

Die Antriebsanordnung kann beispielsweise durch Betätigung einer Abzughebelanordnung eine Bewegung der Stösselanordnung in Richtung eines Austragsendes der Mehrkomponentenkartusche bewirken.

Nach einem weiteren Ausführungsbeispiel können der erste Stössel und der zweite Stössel gleich gross sein.

Die Erfindung umfasst insbesondere ein System, welches ein Austraggerät nach einem der vorherigen Ausführungsbeispiele umfasst, sowie zumindest eine Mehrkomponentenkartusche zur Aufnahme in das Austraggerät.

Das Verfahren zur Befestigung eines Kartuschenendes einer Mehrkomponentenkartusche in einem Austraggerät umfasst die folgenden Schritte: Einstecken des Kartuschenendes der Mehrkomponentenkartusche in ein Aufnahmeelement in eine Montageposition, welches drehbar im Gehäuse angeordnet ist, wobei sich das Kartuschenende an der Einlassseite von mit einer Füllmasse befüllten und am Kartuschenende durch je einen Kolben fluiddicht verschlossenen ersten und zweiten Vorratsbehälters befindet, Drehen des Kartuschenelements und des drehfest mit dem Kartuschenende verbundenen Aufnahmeelements in eine Austragsposition.

Insbesondere kann die Montageposition und/oder die Austragsposition durch einen Anschlag oder eine Verriegelungselement festgelegt werden, es ist auch möglich die Montageposition und/oder die Austragsposition zu sichern, insbesondere durch den Anschlag und/oder das Verriegelungselement festzustellen.

Das Feststellen kann ein Einrasten umfassen, wobei beim Einrasten ein Klickgeräusch erzeugt werden kann, welches dem Benutzer signalisiert, dass das Einrasten erfolgt ist.

Durch Drehen in die Gegenrichtung kann das Kartuschenende von der Austragsposition in die Montageposition zurückgeführt werden. In der Montageposition kann das Kartuschenende aus dem Aufnahmeelement entnommen werden.

Das Aufnahmeelement kann über ein Codierungselement verfügen. Mittels des Codierungselements können die Vorratsbehälter korrekt mit dem Austraggerät verbunden werden. Die korrekte Verbindung ist für unterschiedliche Mischverhältnisse unerlässlich, für die gilt, dass die Stössel unterschiedliche Grössen aufweisen können.

Die Stössel werden von einer Antriebsanordnung bewegt. Die Antriebsanordnung enthält nach einem Ausführungsbeispiel eine Abzughebelanordnung. Durch Betätigen der Abzughebelanordnung wird ein mit der Abzughebelanordnung verbundener Vorschubmechanismus betätigt, sodass eine Bewegung der Stössel in Richtung des Austragsendes der Mehrkomponentenkartusche erfolgt. Der Vorschubmechanismus enthält mindestens ein drehbares Fingerelement, welches in eine an der Stösselanordnung angebrachte Zahnschiene eingreift. Analog hierzu wäre auch denkbar, an dieser Stelle ein Klemmelement vorzusehen. Mittels des Klemmelements kann die Stösselanordnung gemäss eines alternativen, nicht dargestellten Ausführungsbeispiels über einen Reibschluss bewegt werden.

Durch die Bewegung des Stössels wird in der Austragsposition ein in dem entsprechenden Vorratsbehälter der Mehrkomponentenkartusche verschiebbar gelagerter Kolben in Richtung des Austragsendes der Mehrkomponentenkartusche verschoben. Hierdurch wird das Füllvolumen des entsprechenden Vorratsbehälters verringert und die Füllmasse über das Austragsende der Mehrkomponentenkartusche ausgetragen. Am Austragsende der Mehrkomponenenkartusche kann ein Mischer angebracht sein. Dieser Mischer kann ein statisches Mischelement enthalten, um die Komponenten der Füllmasse jedes der Vorratsbehälter miteinander zu vermischen.

Nachfolgend wird die Erfindung anhand der Zeichnungen erläutert. Es zeigen:
- Fig. 1: einen Längsschnitt durch ein Austraggerät gemäss eines ersten Ausführungsbeispiels, bei welchem ein Teil des Gehäuses entfernt ist,
- Fig. 2: ein Aufnahmeelement nach einem ersten Ausführungsbeispiel und eine Zweikomponentenkartusche, die zur Aufnahme in das Aufnahmeelement bestimmt ist,
- Fig. 3: das Aufnahmeelement gemäss Fig. 2 mit der darin aufgenommenen Zweikomponentenkartusche,
- Fig. 4: eine Ansicht des Aufnahmeelements gemäss Fig. 2 von der Kartuschenseite,
- Fig. 5: eine Ansicht des Aufnahmeelements, von der Seite, welche in das Gehäuse des Austraggeräts aufgenommen ist,
- Fig. 6: eine Ansicht des Aufnahmeelements nach einem zweiten Ausführungsbeispiel von der Kartuschenseite,
- Fig. 7: eine Ansicht des Aufnahmeelements, von der Seite, welche in das Gehäuse des Austraggeräts aufgenommen ist.

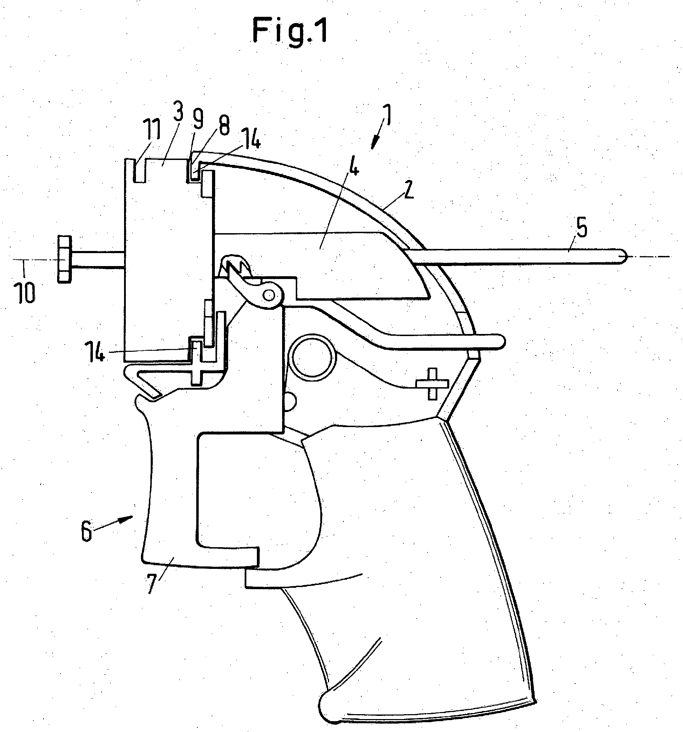

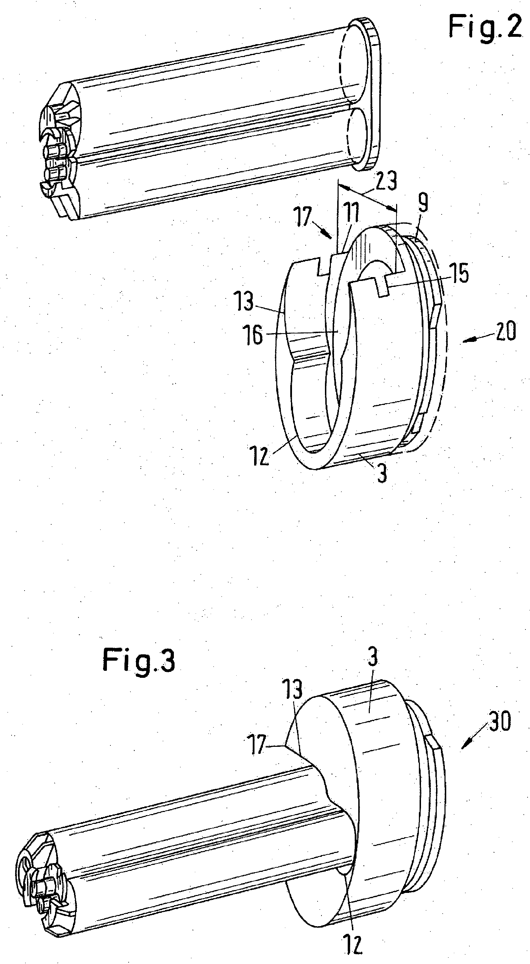

In Fig. 1 ist ein Längsschnitt durch ein Austraggerät 1 gemäss eines ersten Ausführungsbeispiels dargestellt. Ein Teil des Gehäuses 2 ist entfernt, um die Anordnung der einzelnen Komponenten des Austraggeräts als sichtbare Teile darzustellen. In dem Gehäuse 2 ist ein Aufnahmeelement 3 zur Aufnahme eines Kartuschenendes der Mehrkomponentenkartusche angeordnet. Eine derartige Mehrkomponentenkartusche ist beispielsweise in Fig. 2 gezeigt. Das Kartuschenende der Mehrkomponentenkartusche befindet sich an der Einlassseite der Kartusche und umfasst eine Mehrzahl von mit einer Füllmasse befüllten und am Kartuschenende durch je einen Kolben fluiddicht verschlossenen Vorratsbehältern. In der vorliegenden Anordnung sind zwei Vorratsbehälter gezeigt.

In Fig. 1 ist die Mehrkomponentenkartusche nicht dargestellt, um die Darstellung nicht zu unübersichtlich zu gestalten. Das Aufnahmeelement 3 enthält Öffnungen, durch welche eine Stösselanordnung 5 hindurch bewegbar ist. In dem Gehäuse 2 befindet sich ferner eine Halterung 4 für die Stösselanordnung 5. Die Stösselanordnung 5 umfasst zwei auf einer Führungsschiene gelagerte Stössel. Diese Stössel sind in Fig. 1 in horizontaler Richtung verschiebbar. Sie drücken auf die Kolben der Mehrkomponentenkartusche und bewegen diese in Richtung des Austragsendes der Mehrkomponentenkartusche. Hierdurch wird die in den Vorratsbehältern befindliche Füllmasse ausgetragen.

Die Bewegung der Stössel erfolgt durch eine Antriebsanordnung 6, die zur Bewegung der Stösselanordnung 5 dient. Durch Betätigung einer Abzughebelandordnung 7 kann eine Bewegung der Stösselanordnung 5 in eine Richtung eines Austragsendes der Mehrkomponentenkartusche erfolgen.

Diese Bewegungsrichtung in Richtung eines Austragsendes wird als Austragsrichtung zum Austrag der Füllmasse aus den Vorratsbehältern der Mehrkomponentenkartusche bezeichnet. Die Bewegung der Stösselanordnung 5 erfolgt entlang einer durch die Stösselanordnung 5 verlaufenden Längsachse.

Das Aufnahmeelement weist eine Drehachse 10 auf, die im wesentlichen parallel zur Austragsrichtung angeordnet ist. Das in das Aufnahmeelement 3 eingeschobene Kartuschenende wird durch eine Drehung um die Drehachse 10 von einer Montageposition in die Austragsposition übergeführt. Das Aufnahmeelement 3 ist in einem Führungselement 8 drehbar angeordnet. Das Führungselement 8 ist im Gehäuse 2 angeordnet, kann insbesondere als Teil des Gehäuses ausgebildet sein und somit untrennbar mit dem Gehäuse 2 verbunden sein. Gemäss Fig. 1 ist das Führungselement 8 ein Vorsprung 14, der in einer Nut 9 des Aufnahmeelements führbar ist. Die Nut ist als zumindest teilweise umlaufende Nut 9 ausgebildet. Der Vorsprung 14 kann aus mehreren Teilen bestehen, die am Umfang des Führungselements 8 angeordnet sind,

Fig. 2 zeigt das Aufnahmeelement 3 nach dem ersten Ausführungsbeispiel und eine Zweikomponentenkartusche, die zur Aufnahme in das Aufnahmeelement 3 bestimmt ist. Das Aufnahmeelement 3 ist ein in der Grundform ein im wesentlichen zylinderförmiger Körper, welcher über die Nut 9 im Gehäuse 2 gehalten ist, welches in der Fig. 3, weggelassen ist.

Das Kartuschenende weist zumeist einen Flansch auf, welcher die beiden Vorratsbehälter der Mehrkomponentenkartusche auf der Einlassseite verbindet. Dieser Flansch wird bei Montage der Kartusche in eine im Aufnahmeelement 3 angeordnete Führungsnut 11 eingeführt, welche der Aufnahme des Kartuschenendes dient. Die Führungsnut 11 ist Teil eines im Aufnahmeelement befindlichen Hohlraums 16, welcher im wesentlichen die Form des Kartuschenendes aufweist, insbesondere des Flansches des Kartuschenendes. Der Hohlraum 16 weist eine erste frontseitige Öffnung 12 und eine zweite frontseitige Öffnung 13 auf, welche im zusammengebauten Zustand die Vorratsbehälter der Mehrkomponentenkartusche aufnehmen.

Der Hohlraum weist des weiteren eine Öffnung 17 im Mantel des Aufnahmeelements auf, welche ein Einschieben und Ausschieben des Kartuschenendes ermöglicht. Die Öffnung 17 ist gerade so gross, dass das Kartuschenende derart in das Aufnahmeelement eingeführt werden kann, dass die beiden Vorratsbehälter nacheinander eingeschoben werden, das heisst, der erste Vorratsbehälter wird über die für den zweiten Vorratsbehälter bestimmte zweite Öffnung 13 verschoben, um in die Position zu gelangen, in welcher er koaxial zu der für den ersten Vorratsbehälter bestimmten ersten Öffnung 12 angeordnet ist. Das heisst, das Kartuschenende wird derart in das Aufnahmeelement eingeführt, dass das Kartuschenende über die zweite Öffnung 13 geschoben wird, um die erste Öffnung 12 zu überdecken. Beim Zusammenbau von Kartuschenende und Aufnahmeelement werden somit die Vorratsbehälter entlang der in einer Normalebene zu ihren Längsachsen liegenden Verbindungslinie ebendieser Längsachsen zwischen der zweiten Öffnung 13 und der ersten Öffnung 12 verschoben.

Die Öffnung 17 hat somit eine maximale Breitenabmessung 23, die im wesentlichen der Breitenabmessung des Flansches entspricht. Die Tiefe des Hohlraums entspricht zumindest der Längsabmessung des Flansches. Diese Anordnung hat den Vorteil, dass für die mantelseitige Öffnung 17 der kleinstmögliche Anteil an der Mantelfläche des Aufnahmeelements 3 verbraucht wird. Dies hat eine minimale Verschwächung des Aufnahmeelements 3 zur Folge und erhöht somit die Steifigkeit und Robustheit des Aufnahmeelements 3.

Wenn das Austraggerät in vertikaler Position gehalten wird und sich das Aufnahmeelement 3 in Montageposition 20 befindet, ist die Öffnung 17 bevorzugt oben. Das heisst, die Kartusche wird in dieser bevorzugten Variante von oben und damit quer zur Austragrichtung eingesetzt.

Fig. 3 zeigt das Aufnahmeelement gemäss Fig. 2 mit der darin aufgenommenen Zweikomponentenkartusche. Der Drehwinkel beträgt von der Montageposition 20 in die Austragsposition 30 im wesentlichen 90°. In Fig. 3 ist ersichtlich, dass die mantelseitige Öffnung 17 durch die Drehung von der oberen Position in eine seitliche Position zu liegen kommt, sodass die Kartusche eine im wesentlichen horizontale Position einnimmt. Wenn das Austraggerät in vertikaler Position gehalten wird, liegen erste und zweite Öffnung 12, 13 im wesentlichen nebeneinander, sodass die Längsachsen der Vorratsbehälter im wesentlichen in einer Horizontalebene angeordnet sind.

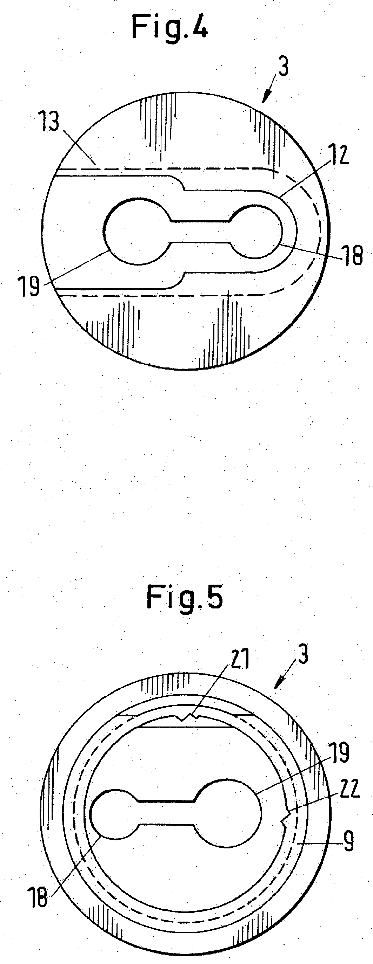

Fig. 4 zeigt eine Ansicht des Aufnahmeelements gemäss Fig. 2 von der Kartuschenseite im eingebauten Zustand. Die erste und zweite Öffnung 12, 13 sind in der Stellung gezeigt, welcher der Austragstellung entspricht. Des weiteren sind in der Darstellung der Fig. 4 die Ausnehmungen 18, 19 für die beiden Stössel gezeigt. Die Ausnehmungen 18, 19 sind im wesentlichen kreisförmig. Der Durchmesser der Ausnehmung 18 ist kleiner als der Durchmesser der Ausnehmung 19. Diese Anordnung eignet sich für Mehrkomponentenkartuschen, deren Mischungsverhältnis mindestens 4:1 beträgt. Insbesondere kann das Mischungsverhältnis 10:1 betragen oder auch darüber liegen. Das Füllvolumen kann mindestens 10 ml, vorzugsweise mindestens 25 ml, besonders bevorzugt 50 ml betragen. Das Füllvolumen kann maximal 200 ml betragen, bevorzugt maximal 75 ml betragen.

Fig. 5 zeigt eine Ansicht des Aufnahmeelements von der Seite, welche in das Gehäuse des Austraggeräts aufgenommen ist. Die Ausnehmungen 18 und 19 für die Stössel sind ebenso gezeigt wie die Nut 9, welche zur Aufnahme des im Gehäuse angeordneten Führungselements dient. Des weiteren ist ein Rastelement 21 sowie ein Rastelement 22 gezeigt. Das Rastelement 21 bewirkt eine Feststellung des Aufnahmeelements in der Austragsposition 30, das Rastelement 22 bewirkt eine Feststellung des Aufnahmeelements in der Montageposition 20.

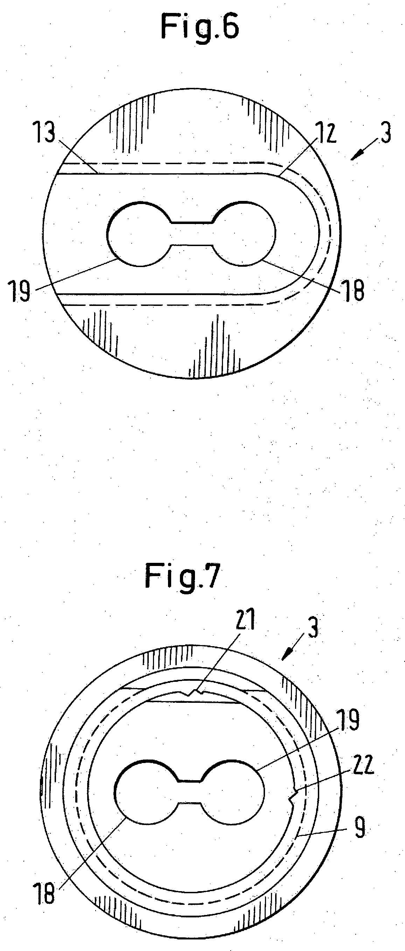

Fig. 6 zeigt eine Ansicht des Aufnahmeelements nach einem zweiten Ausführungsbeispiel von der Kartuschenseite im eingebauten Zustand. Die erste und zweite Öffnung 12, 13 sind in der Stellung gezeigt, welcher der Austragstellung entspricht. Des weiteren sind in der Darstellung der Fig. 4 die Ausnehmungen 18, 19 für die beiden Stössel gezeigt. Die Ausnehmungen 18, 19 sind im wesentlichen kreisförmig. Der Durchmesser der Ausnehmung 18 ist von gleicher Grösse wie der Durchmesser der Ausnehmung 19. Diese Anordnung eignet sich für Mehrkomponentenkartuschen, deren Mischungsverhältnis 1:1 beträgt oder nicht wesentlich hiervon abweicht. Insbesondere kann das Mischungsverhältnis bis zu 2:1 betragen. Das Füllvolumen kann mindestens 10 ml, vorzugsweise mindestens 25 ml, besonders bevorzugt 50 ml betragen. Das Füllvolumen kann maximal 200 ml betragen, bevorzugt maximal 75 ml betragen. Fig. 7 zeigt eine Ansicht des Aufnahmeelements, von der Seite, welche in das Gehäuse des Austraggeräts aufgenommen ist. Mit Ausnahme der Ausnehmungen 18, 19, die entsprechend Fig. 6 ausgebildet sind, werden in Fig. 7 dieselben Elemente verwendet, sodass auf die Beschreibung zu Fig. 5 verwiesen werden kann.

## Patentansprüche

1. Austraggerät (1) für eine Mehrkomponentenkartusche, enthaltend ein Gehäuse (2), in welchem ein Aufnahmeelement (3) zur Aufnahme eines Kartuschenendes der Mehrkomponentenkartusche angeordnet ist, wobei sich das Kartuschenende an der Einlassseite von einem mit einer Füllmasse befüllten und am Kartuschenende durch je einen Kolben fluiddicht verschlossenen ersten und zweiten Vorratsbehälter befindet, wobei in dem Gehäuse (2) eine Stösselanordnung (5) und eine Antriebsanordnung (6) zur Bewegung der Stösselanordnung (5) angeordnet sind, wobei durch die Antriebsanordnung (6) eine Bewegung der Stösselanordnung (5) in eine Austragsrichtung zum Austrag der Füllmasse aus den Vorratsbehältern der Mehrkomponentenkartusche ausführbar ist, wobei das Aufnahmeelement eine Drehachse (10) aufweist, die im wesentlichen parallel zur Austragsrichtung angeordnet ist, **dadurch gekennzeichnet, dass** das in das Aufnahmeelement (3) eingeschobene Kartuschenende durch eine Drehung um die Drehachse (10) von einer Montageposition (20) in eine Austragsposition (30) überführbar ist.

2. Austraggerät nach Anspruch 1, wobei der Drehwinkel von der Montageposition (20) in die Austragsposition (30) im wesentlichen 90° beträgt.

3. Austraggerät nach einem der vorhergehenden Ansprüche, wobei das Aufnahmeelement (3) in einem Führungselement (8) drehbar angeordnet ist.

4. Austraggerät nach Anspruch 3, wobei das Führungselement (8) im Einbauzustand im Gehäuse (2) angeordnet ist und im Einbauzustand untrennbar mit dem Gehäuse (2) verbunden ist.

5. Austraggerät nach einem der Ansprüche 3 oder 4, wobei das Aufnahmeelement (3) im Führungselement (8) im Gehäuse (2) drehbar gelagert ist.

6. Austraggerät nach einem der Ansprüche 3 bis 5, wobei das Führungselement (8) als ein Vorsprung (14) ausgebildet ist, welcher in einer Nut (9) des Aufnahmeelements (3) aufnehmbar ist.

7. Austraggerät nach einem der vorhergehenden Ansprüche, wobei beim Zusammenbau von Kartuschenende und Aufnahmeelement (3) die Längsachsen der ersten und zweiten Vorratsbehälter entlang der Verbindungslinie zwischen einer zweiten Öffnung (13) für den zweiten Vorratsbehälter und einer ersten Öffnung (12) für den ersten Vorratsbehälter verschiebbar sind.

8. Austraggerät nach einem der vorhergehenden Ansprüche, wobei das Aufnahmeelement (3) eine Führungsnut (11) zur Aufnahme des Kartuschenendes aufweist.

9. Austraggerät nach einem der vorhergehenden Ansprüche, wobei das Aufnahmeelement (3) oder das Führungselement (8, 9) einen Anschlag (15) aufweist, um die Drehung zwischen der Montageposition (20) und der Austragsposition (30) zu begrenzen.

10. Austraggerät nach einem der vorhergehenden Ansprüche, wobei das Aufnahmeelement (3) einen Anschlag und/oder ein Verriegelungselement zum Feststellen der Mehrkomponentenkartusche in der Austragsposition (30) und/oder Montageposition (20), insbesondere ein Rastelement zum Einrasten in der Austragsposition (30) und/oder der Montageposition (20) aufweist.

11. Austraggerät nach Anspruch 10, wobei beim Einrasten ein Klickgeräusch emittierbar ist, sodass das Einrasten für den Benutzer hörbar ist.

12. Austraggerät nach einem der vorhergehenden Ansprüche, wobei das Kartuschenende in das Aufnahmeelement (3) einschiebbar und wieder aus dem Aufnahmeelement (3) entfernbar ist.

13. Austraggerät nach einem der vorhergehenden Ansprüche, wobei das Aufnahmeelement (3) ein Codierungselement zur korrekten Positionierung der Vorratsbehälter der Mehrkomponentenkartusche aufweist.

14. Austraggerät nach Anspruch 13, wobei das Codierungselement eine erste Öffnung (12) und eine zweite Öffnung (13) umfasst, in welchen je ein Vorratsbehälter der Mehrkomponentenkartusche aufnehmbar ist, wobei sich der Durchmesser der ersten Öffnung (12) vom Durchmesser der zweiten Öffnung (13) unterscheidet.

15. Austraggerät nach einem der vorhergehenden Ansprüche, wobei durch Betätigung einer Abzughebelanordnung (7) der Antriebsanordnung (6) eine Bewegung der Stösselanordnung (5) in Richtung eines Austragsendes der Mehrkomponentenkartusche erfolgt.

## Claims

1. A dispensing device (1) for a multi component cartridge including a housing (2) in which a reception element (3) for receiving a cartridge end of the multicomponent cartridge is arranged, wherein the cartridge end is located at the inlet side of a first and second storage container filled with a filling mass and respectively sealed in a fluid tight manner at the cartridge end by a respective piston, wherein a plunger arrangement (5) and a drive arrangement (6) for moving the plunger arrangement (5) are arranged in the housing (2), wherein a movement of the plunger arrangement (5) in a dispensing direction can be carried out by the drive arrangement (6) for dispensing the filling mass from the storage containers of the multicomponent cartridge, wherein the reception element has an axis of rotation (10) which is substantially arranged in parallel to the dispensing direction, **characterized in that** the cartridge end pushed into the reception element (3) can be transferred from an assembly position (20) into a dispensing position (30) by a rotation about the axis of rotation (10).

2. A dispensing device in accordance with claim 1, wherein the angle of rotation from the assembly position (20) into the dispensing position (30) amounts to substantially 90°.

3. A dispensing device in accordance with one of the preceding claims, wherein the reception element (3) is rotatably arranged in a guide element (8).

4. A dispensing device in accordance with claim 3, wherein the guide element (8) is arranged in the housing (2) in the installed state and is inseparably connected to the housing (2) in the installed state.

5. A dispensing device in accordance with one of the claims 3 or 4, wherein the reception element (3) is rotatably supported in the guide element (8) in the housing (2).

6. A dispensing device in accordance with any one of the claims 3 to 5, wherein the guide element (8) is formed as a projection (14) which can be received in a groove (9) of the reception element (3).

7. A dispensing device in accordance with any one of the preceding claims, wherein, on assembly of the cartridge end and of the reception element (3), the longitudinal axes of the first and second storage containers are displaceable along the connection line between a second opening (13) for the second storage container and a first opening (12) for the first storage container.

8. A dispensing device in accordance with any one of the preceding claims, wherein the reception element (3) has a guide groove (11) for receiving the cartridge end.

9. A dispensing device in accordance with any one of the preceding claims, wherein the reception element (3) or the guide element (8, 9) has an abutment (15) in order to limit the rotation between the assembly position (20) and the dispensing position (30).

10. A dispensing device in accordance with any one of the preceding claims, wherein the reception element (3) has an abutment and/or a latching element for securing the multicomponent cartridge in the dispensing position (30) and/or in the assembly position (20), in particular has a latching element for latching in the dispensing position (30) and/or in the mounting position (20).

11. A dispensing device in accordance with claim 10, wherein a clicking sound can be emitted on latching, so that the latching is audible for the user.

12. A dispensing device in accordance with any one of the preceding claims, wherein the cartridge end can be inserted into the reception element (3) and can be removed again from the reception element (3).

13. A dispensing device in accordance with any one of the preceding claims, wherein the reception element (3) has a coding element for the correct positioning of the storage containers of the multicomponent cartridge.

14. A dispensing device in accordance with claim 13, wherein the coding element includes a first opening (12) and a second opening (13) in which a respective storage container of the multicomponent cartridge can be received, with the diameter of the first opening (12) being different from the diameter of the second opening (13).

15. A dispensing device in accordance with any one of the preceding claims, wherein a movement of the plunger arrangement (5) in the direction of a dispensing end of the multicomponent cartridge takes place by means of an actuation of a trigger lever arrangement (7) of the drive arrangement (6).

## Revendications

1. Appareil d'application (1) pour une cartouche à plusieurs composants, comprenant un boîtier (2) dans lequel est agencé un élément de réception (3) pour la réception d'une extrémité de la cartouche à plusieurs composants, dans lequel l'extrémité de la cartouche se trouve sur le côté entrée d'un premier et d'un second récipient de réserve, remplis d'une masse de remplissage et obturés de manière étanche aux fluides par un piston respectif à l'extrémité de la cartouche, dans lequel un agencement à poussoir (5) et un agencement d'entraînement (6) destiné à déplacer l'agencement à poussoir (5) sont agencés dans le boîtier (2) et, au moyen de l'agencement d'entraînement (6) un déplacement de l'agencement à poussoir (5) peut être exécuté dans une direction d'application pour l'application de la masse de remplissage hors des récipients de réserve de la cartouche à plusieurs composants, dans lequel l'élément de réception comporte un axe de rotation (10), qui est agencé sensiblement parallèlement à la direction d'application,
**caractérisé en ce que** l'extrémité de cartouche, introduite dans l'élément de réception (3), est susceptible d'être transférée d'une position de montage (20) vers une position d'application (30) par une rotation autour de l'axe de rotation (10).

2. Appareil d'application selon la revendication 1, dans lequel l'angle de rotation depuis la position de montage (20) jusque dans la position d'application (30) s'élève sensiblement à 90°.

3. Appareil d'application selon l'une des revendications précédentes, dans lequel l'élément de réception (3) est agencé avec possibilité de rotation dans un élément de guidage (8).

4. Appareil d'application selon la revendication 3, dans lequel, dans la situation montée, l'élément de guidage (8) est agencé dans le boîtier (2) et, dans la situation de montage, est relié de manière inséparable avec le boîtier (2).

5. Appareil d'application selon l'une des revendications 3 ou 4, dans lequel l'élément de réception (3) est monté avec possibilité de rotation dans l'élément de guidage (8) dans le boîtier (2).

6. Appareil d'application selon l'une des revendications 3 à 5, dans lequel l'élément de guidage (8) est réalisé sous forme d'une saillie (14) qui peut être reçue dans une gorge (9) de l'élément de réception (3).

7. Appareil d'application selon l'une des revendications précédentes, dans lequel, lors de l'assemblage de l'extrémité de la cartouche et de l'élément de réception (3), les axes longitudinaux du premier et du second récipient de réserve sont déplaçables le long de la ligne de liaison entre une seconde ouverture (13) pour le second récipient de réserve et une première ouverture (12) pour le premier récipient de réserve.

8. Appareil d'application selon l'une des revendications précédentes, dans lequel l'élément de réception (3) comporte une gorge de guidage (11) pour la réception de l'extrémité de la cartouche.

9. Appareil d'application selon l'une des revendications précédentes, dans lequel l'élément de réception (3) ou l'élément de guidage (8, 9) comprend une butée (15), afin de limiter la rotation entre la position de montage (20) et la position d'application (30).

10. Appareil d'application selon l'une des revendications précédentes, dans lequel l'élément de réception (3) comprend une butée et/ou un élément de verrouillage pour immobiliser la cartouche à plusieurs composants dans la position d'application (30) et/ou la position de montage (20), en particulier un élément d'enclenchement pour l'enclenchement dans la position d'application (30) et/ou dans la position de montage (20).

11. Appareil d'application selon la revendication 10, dans lequel un bruit de déclic est susceptible d'être émis lors de l'enclenchement, de sorte que l'enclenchement est audible pour l'utilisateur.

12. Appareil d'application selon l'une des revendications précédentes, dans lequel l'extrémité de la cartouche est susceptible d'être introduite dans l'élément de réception et à nouveau enlevée hors de l'élément de réception (3).

13. Appareil d'application selon l'une des revendications précédentes, dans lequel l'élément de réception (3) comprend un élément de codage pour le positionnement correct des récipients de réserve de la cartouche à plusieurs composants.

14. Appareil d'application selon la revendication 13, dans lequel l'élément de codage inclut une première ouverture (12) et une seconde ouverture (13) dans lesquelles un récipient de réserve respectif de la cartouche à plusieurs composants est susceptible d'être reçu, et le diamètre de la première ouverture (12) est différent du diamètre de la seconde ouverture (13).

15. Appareil d'application selon l'une des revendications précédentes, dans lequel un mouvement de l'agencement à poussoir (5) en direction d'une extrémité d'application de la cartouche à plusieurs composants a lieu par actionnement d'un agencement à levier déclencheur (7) de l'agencement d'entraînement (6).
